# EUROPEAN PATENT SPECIFICATION

(11) **EP 1 287 674 B1**
(45) Date of publication and mention of the grant of the patent: **24.02.2010**
(21) Application number: 01940363.3
(22) Date of filing: 25.04.2001
(51) Int. Cl.: H04M 11/06

(54) **DATA TRANSMISSION NETWORK**
DATENÜBERTRAGUNGSNETZWERK
RESEAU D'EMISSION DE DONNEES

(43) Date of publication of application: 05.03.2003
(73) Proprietor: Infineon Technologies AG, 81669 München (DE)
(72) Inventor: KIRSHENBOIM, Gilad, 42490 Netanya (IL); PELEG, Shimon, 45285 Hod Hasharon (IL)
(74) Representative: Reinhard - Skuhra - Weise & Partner GbR
(86) International application number: PCT/EP2001/004687
(87) International publication number: WO 2002/089459

(56) References cited:
- US-A- 6 160 843
- GORALSKI W: "ADSL and DSL Tecnologies" ADSL AND DSL TECHNOLOGIES, NEW YORK: MCGRAW-HILL, US, 1998, pages 174-268, XP002169985 ISBN: 0-07-024679-3

## Description

The present invention refers to a data transmission network and a method for data transmission which allow xDSL data transmission and voice data transmission between a backbone network and a network termination device on any data transmission medium such as a copper telephone line.

US 6,160,843 describes a communication server apparatus providing xDSL-services, wherein a central office is coupled to subscribers via subscriber lines. For accessing data services, the subscriber on computer executes a program that generates a request which indicates a need for a data service. A modem repetitively transmits the need for a data service in a request interval, wherein the request interval comprises the time length of the request and a silent interval until the next request. A communication server within the central office selects an xDSL-modem to communicate with an xDSL-modem of the computer. The central station selects computers which have sent a request message depending on stored status information and sends an acknowledgement information to a modem of the selected computer.

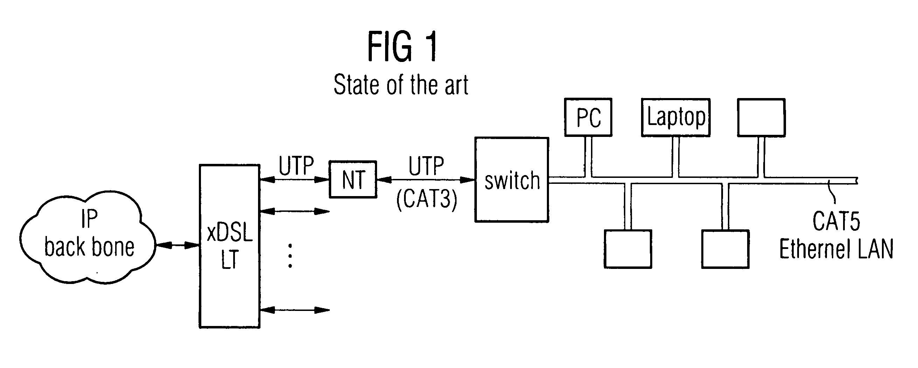

Fig. 1 shows a data transmission network according to the state of the art. An IP backbone is connected via a broadband data transmission line to a main switch such as an xDSL line termination device. The main switch is connected to several xDSL network termination devices NT over xMII interface.

The NT is connected via a UTP telephone line to a local switch or hub which distributes the data packages received from the main switch to different data communication devices such as a personal computer or a laptop or an IP phone via a CAT5 communication line.

The switch and the data communication devices form a local area network (LAN), e.g. an Ethernet local area network. The Ethernet local area network according to the state of the art does not allow data exchange between data communication devices and the local switch via an ordinary CAT3 copper telephone line over home telephone topology which requires its own wiring structure besides the telephone lines which are already installed in a building.

It is a main object of the present invention to provide a data transmission network and a method for data transmission which allow xDSL data exchange and a voice data exchange on any data transmission medium and in particular on an ordinary POTS telephone line.(POTS: Play all Telephone Service).

This object is achieved with a data transmission network having the features of main claim 1 and by a data transmission method having the features of claim 19.

The data transmission network according to the invention has at least one line termination device (LT) connected via a data transmission medium to several network termination devices NT.

Each network termination device (NT) comprises
a request message generator for generating a data transmission request message when a data communication device connected to the network termination device is sending data, and
an xDSL transceiver for transmitting an upstream data frame including the generated request message via the data transmission medium to the line termination device;
said line termination device comprising
a selection unit for selecting network termination devices which have sent a request message depending on stored status information data of the network termination devices,
a grant message generator for generating data transmission grant messages for the selected network termination devices, and
an xDSL transceiver for broadcasting downstream data frames including the generated grant messages via the transmission medium to the network termination devices.

In a preferred embodiment, the data transmission medium is the telephone line, preferably a UTP copper telephone line.

In a preferred embodiment of the data transmission network, the data transmission request message comprises a request message opcode and a number of time slots required for data transmission of the data sent by the data communication device.

In a preferred embodiment of the data transmission network, a data transmission grant message comprises a grant message opcode and an address of the selected network termination device.

In a still further preferred embodiment of the data transmission network according to the present invention, the upstream data frames are sent from the network termination devices to the line termination device via the data transmission medium in an upstream frequency band, and the downstream data frames are sent from the line termination device to the network termination devices via the data transmission medium in a downstream frequency band.

The downstream frequency band ranges preferably between 1 and 3 MHz, and the upstream frequency band ranges preferably between 4 and 8 MHz.

The line termination device comprises in a preferred embodiment an MII interface for connection to a switch.

Each data frame comprises in a preferred embodiment
a synchronization data field,
the message data field,
a payload data field, and
an error correction data field.

In a preferred embodiment, each network termination device is connected to a passive signal splitter.

The passive signal splitter comprises preferably a low-pass filter for filtering a telephone signal and a high-pass filter for filtering an xDSL data signal.

In a preferred embodiment, the line termination device comprises storing means for storing the information data of the different network termination devices connected to the line termination device.

In a preferred embodiment, the storing means stores the addresses of the network termination devices and the corresponding numbers of required time slots received from the network termination devices in a request message.

In a still further preferred embodiment of the data transmission network according to the present invention, the selection unit of the line termination device reads the status information data stored in the storing means, selects the network termination devices for data transmission according to a programmed selection algorithm and activates the grant message generator for generating grant messages for the selected network termination devices.

In a preferred embodiment, the xDSL transceiver of the line termination device includes an adaptive gain control circuit and an equalizer.

The line termination device comprises preferably
first storing means for storing the automatic gain control coefficients and the network termination devices connected to the line termination device and
second storing means for storing equalizer coefficients for the network termination devices connected to the line termination device.

The automatic gain control coefficients of the network termination device selected by the selecting unit are loaded into the automatic gain control circuit of the xDSL transceiver of the line termination device.

The equalizer coefficients of the network termination device selected by the selecting unit are loaded preferably into the equalizer of the xDSL transceiver of the line termination device.

In a preferred embodiment of the data transmission network according to the present invention, the network termination device comprises a grant decoder for decoding messages within downstream data frames broadcasted by the line termination device.

In a preferred embodiment, the xDSL transceiver of the line termination device and the network termination devices are VDSL transceiver.

In a preferred embodiment, the impedances of the network termination devices connected to the data transmission medium are balanced.

In a preferred embodiment of the data transmission network according to the present invention, at least eight network termination devices are connected via the data transmission medium to the line termination device.

In a preferred embodiment of the data transmission network, several line termination devices are connected to a switch.

In a preferred embodiment of the data transmission network, the switch is connected to an IP backbone.

The invention further provides a method for data transmission comprising the following steps:
generating a data transmission request message by a network termination device when the network termination device receives data from a connected data communication device, transmitting the generated data transmission request message within an upstream data frame via a data transmission medium to a line termination device while getting a grant message, selecting the network termination devices depending on the stored status information data of the network termination devices,
generating data transmission grant messages for the selected network termination devices by the line termination device, broadcasting downstream data frames containing the generated grant messages via the data transmission medium to the network termination devices, and
transmitting data from the selected network termination device after the grant message has been decoded.

In the following preferred embodiments of the data transmission network and the data transmission method according to the present invention are described in detail with respect to the enclosed Figures.
Fig. 1 shows a data transmission network according to the state of the art;
Fig. 2 shows a data transmission network according to the present invention having a topology as found in the United States of America;
Fig. 3 shows a data transmission network according to the present invention having a topology as found in Europe and in Asia;
Fig. 4 shows a block diagram of a line termination device according to the present invention;
Fig. 5 shows a network termination status table stored within a line termination device;
Fig. 6 shows a block diagram of a network termination device according to the present invention;
Fig. 7a, 7b show a request message and a grant message in principle;
Fig. 8 shows a flowchart of the operation within a line termination device;
Fig. 9 shows a flowchart of the operations within the network termination device according to the invention.

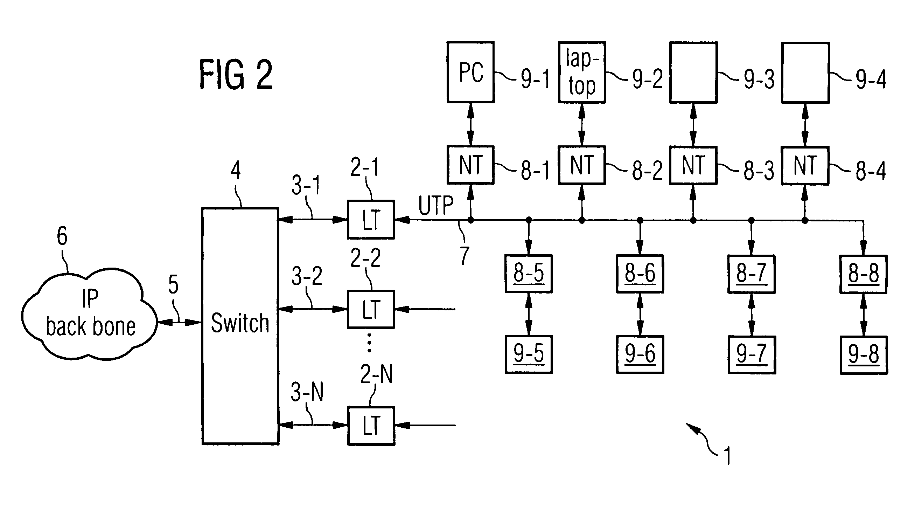

Fig. 2 shows a preferred embodiment of a data transmission network 1 according to the present invention. The data transmission network 1 as shown in Fig. 2 has a network topology as found in the United States. The data transmission network 1 comprises several line termination devices 2-1 to 2-N connected via lines 3-1 to 3-N to a switch 4 which is connected via a line 5 to an IP backbone 6. Each line termination device 2 is connected via a data transmission medium 7 through several network termination devices 8-1 to 8-M, wherein in the example shown in Fig. 2, the number M of connected network termination devices is eight. The data transmission medium 7 in the preferred embodiment as shown in Fig. 2 is an unshielded twisted pair of telephone lines (UTP) made of copper. Each network termination device 8-I is connected to a corresponding data communication device 9-I. The data communication devices are personal computers, IP telephones, laptops or television set-top boxes or any other network equipment.

In the data transmission network 1 as shown in Fig. 2, the switch 4 is connected to the IP backbone 6 and exchanges data with a very high data exchange rate. The main switch 4 is e.g. an Ethernet switch to which several line termination devices according to the present invention are connected. The Ethernet switch 4 delivers the Ethernet packets to its destination according to a destination address. The Ethernet packets are broadcasted by the line termination device as downstream data frames via the transmission medium 7 to several network termination devices 8-1 to 8-M in a downstream frequency band.

The downstream frequency band may in a VDSL application range between 1 and 3 MHz. The Ethernet packets are broadcasted with a data transfer rate of e.g. 15/20 MBPS. The network termination device 8-i receives the data packet and transmits it to the corresponding data communication device 9-i. Data coming from data communication device 9-i is sent within an upstream data frame via the data transmission medium 7 to the corresponding line termination device 2.

There are three different possibilities for data transmission paths. In a first data path, the network termination device 8-i sends an upstream Ethernet data frame to the corresponding line termination device 2 which delivers the data frame to the main switch 4. If the upstream frame is addressed to another network termination device 8-j within the same group of network termination devices, the switch 4 sends the received upstream data frame as a downstream data frame via the line termination 2 and the data transmission medium 7 to the addressed destination network termination device 8-j.

If the upstream data frame is addressed to a network termination device 8-j within another group of network termination devices 8, the switch 4 sends the received upstream data frame to the corresponding line termination device 2-j of the destination network termination device 8-j which transmits it via another data transmission telephone line to the addressed network termination device8-j.

In a third possible data transmission path, the upstream data frame sent by a network termination device 8-j is destined for a remote network termination device and will be delivered from switch 4 via line 5 to the IP backbone 6.

In the data transmission network shown in Fig. 2 according to the US-topology, all network termination devices 8 within one group are connected to the same telephone copper line 7. The network termination devices 8 may be distributed within a range of 100 m. A feeding line between the line termination device 2 and the different network termination devices 8 may be in one building and may have a length between 0.5 and 1 km. The data transmission medium 7 in the form of the unshielded twisted pair telephone line made of copper is already wired within the building and is used by the present invention also for xDSL data transmission. Accordingly the data communication devices 9-i within in the building may form a local area network (LAN) without the need to provide a separate Ethernet cable structure.

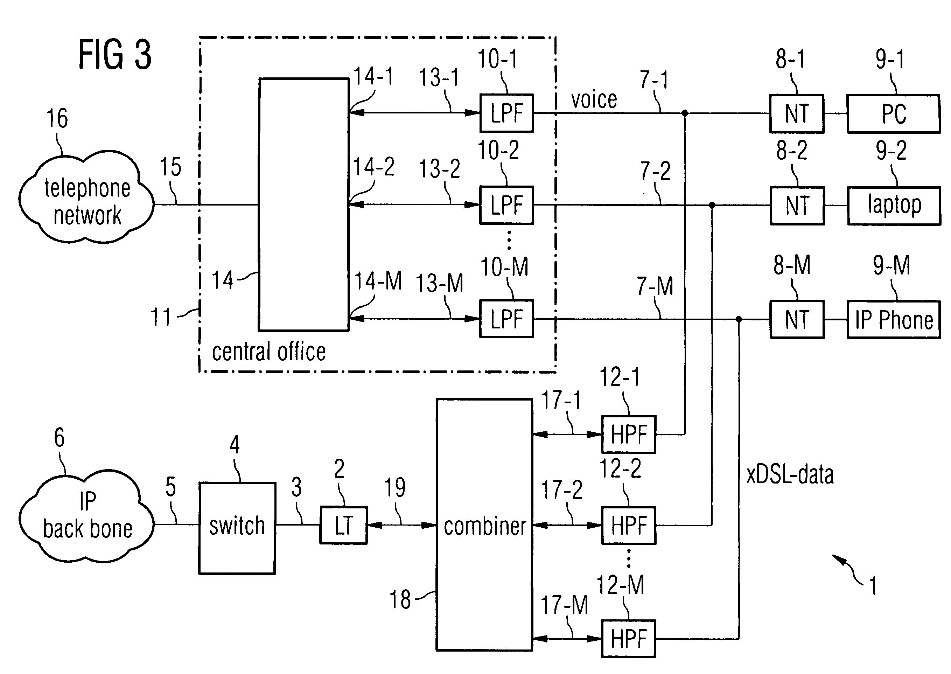

Fig. 3 shows a data transmission network 1 having the topology as can be found in Europe and Asia. Several data communication devices 9-i are connected by means of a network termination device 8-i and a data transmission medium 7-i such as an unshielded twisted telephone line (UTP) to a corresponding low-pass filter 10-i within a central office 11 and to a corresponding high-pass filter 12-i. The low-pass filters 10 may have a cut off frequency between 8 kHz and 0.1 MHz for filtering voice data, and the high-pass filters 12 may have a cut off frequency between 0.1 MHz and 0.7 MHz for filtering xDSL data signals. Each low-pass filter 10-i within the central office 11 is connected via a line 13-i to a telephone switch entry 14-i of a telephone switch 14. The telephone switch 14 is connected via a line 15 to an ordinary POTS telephone network 16.

The high-pass filter 12 are connected via lines 17 to a combiner 18 which adds up the received high-pass filtered signals. The combiner 18 is connected via line 19 to a line termination device 2. The line termination device 2 is connected via line 3 to a main switch 4 which is connected via line 5 to an IP backbone 6. In the data transmission network having the topology as shown in Fig. 3, a multi-port POTS/xDSL splitter comprising the plurality of low-pass filters 10 and high-pass filters 12 is provided. The splitter filters the telephone signal on one side and filters the xDSL signal on the other side.

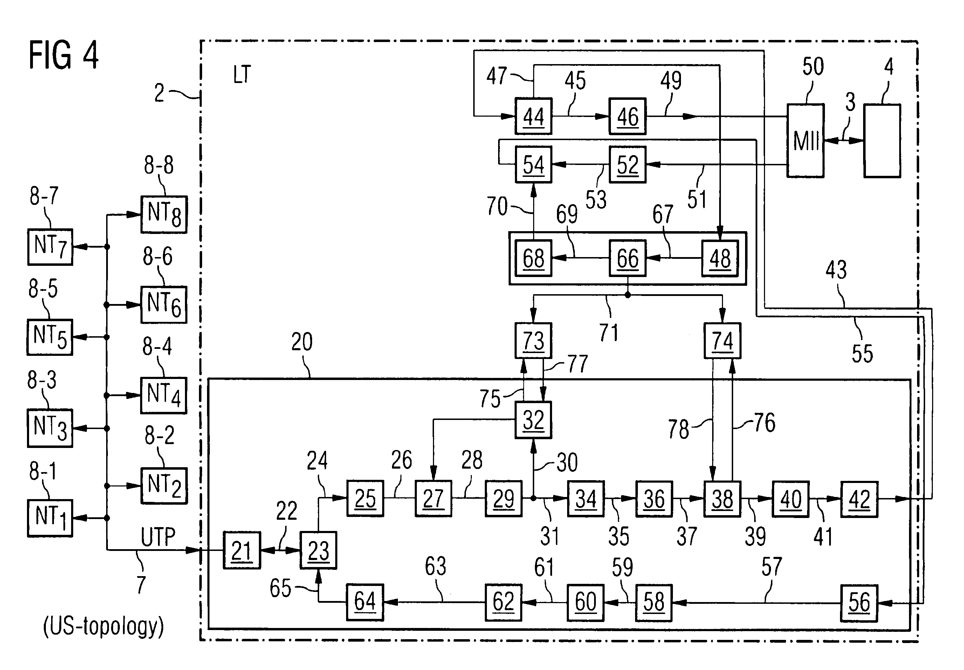

Fig. 4 shows a block diagram of a line termination device 2 according to a preferred embodiment of the present invention.

The line termination device 2 comprises an xDSL transceiver 20 for broadcasting downstream data frames to several network termination devices 8-I via the data transmission medium 7 and for receiving upstream data frames from the network termination devices 8-I via the data transmission medium 7. The data medium 7 is e.g. an unshielded twisted pair telephone line UTP made of copper. The xDSL transceiver 20 within the line termination device 2 comprises a line driver 21 for driving the received signals and for driving signals to be transmitted. The line driver 21 is connected via a line 22 to a hybrid circuit 23 which applies the received data signals via a line 24 to an analog receiving filter 25 which is connected on the output side via a line 26 to an amplifier unit 27 for amplifying the received and filtered data signals. The amplified received signal is supplied via line 28 to an analog/digital converter 29 which converts the received analog signal to a digital signal. The received digital signal is supplied via lines 30, 31 to an automatic gain control circuit 32 controlling the amplifier 27 via acontrol line 33 and to a digital QAM demodulator 34. The QAM demodulator is connected on its output side via a line 35 to a digital receiving filter 36 for suppressing noise. The digital filter 36 is connected via line 37 to an equalizer 38 for compensating distortions. The equalizer 38 is connected via line 39 to a slicer 40 for determining the received data symbols. The slicer 40 is connected via line 41 to a QAM decoder 42 which generates from the detected data symbols the corresponding data bits to be packed in a data frame. The QAM decoder 42 is connected via line 43 to a TC deframer 44 the TC deframer which is connected via line 45 to an deframer 46, e.g. an Ethernet deframer. The TC deframer 44 distracts messages from the received upstream data frames and supplies them via a line 47 to an NT status memory 48. The deframer 46 is connected via line 49 to an MII interface 50 for connecting the line termination device 2 via a line 3 to a switch 4.

The MII interface 50 is connected via a line 51 to a framer 52, e.g. an Ethernet framer. The Ethernet framer 52 is connected via line 53 to a TC (TC: Transparence Convergence) framer 54. The TC framer 54 is connected via line 55 to a QAM encoder 56 within the xDSL transceiver 20. The QAM encoder 56 is connected via line 57 to a digital transmitting filter 58. The filtered digital signal is supplied via line 59 to a digital modulator 60 which is connected on its output side via line 61 to a digital/analog converter 62. The modulated digital signal is converted by the digital analog converter 62 to an analog signal which is supplied via line 63 to an analog filter 64. The filtered analog signal is supplied via line 65 through the hybrid circuit 23 and broadcasted via the line driver 21 and the data transmission medium 7 to the network termination devices 8-I.

The line termination device 2 comprises a selection unit 66 which is connected via lines 67 to the NT status memory 48. The selection unit 66 selects the network termination devices which have sent a request message within an upstream data frame depending on the status information data stored within the status storage means 48.

The line termination device 2 further comprises a grant message generator 68 connected to the selection unit 66 via line 69. The grant generator 68 is connected via control line 70 to the TC framer unit 54. The selection unit 66 selects according to the information data stored within the storage means 48 a network termination device 8-j connected to the line termination device 2 and activates the grant message generator 68 for generating a data transmission grant message for the selected network termination device 8-i.

The selection unit 66 further controls via control lines 71, 72 an AGC random access memory 73 and an equalizer coefficient random access memory 74. In the AGC random access memory 73, the automatic gain control coefficients for the different network termination devices 8-i of one group are stored. In the equalizer coefficient random access memory 74, the equalizer coefficients for the different network termination devices 8-i within one group connected to the line termination device are stored. The automatic gain control random access memory 73 stores the AGC coefficients via line 75 from the automatic gain control circuit 32 within the xDSL transceiver 20. The equalizer coefficient random access memory 74 stores the equalizer coefficients of the different network termination devices from the equalizer 38 via line 76. The AGC coefficients of the selected network termination device are loaded into the automatic gain control circuit 32 via a line 77 in response to a control signal supplied by the selection unit 66 via control line 71. The equalizer coefficients are loaded into the equalizer 38 via a line 78 in response to a control signal of the selection unit 66 delivered via control line 72.

The selection unit 66 reads the status information data stored within the NT status storing means 48 and selects the network termination devices 8-i for data transmission according to a programmed selection algorithm and activates the grant message generator 68 for generating grant messages for the selected network termination devices 8-i. The selection of the network termination devices may be performed by any selection scheme such as a priority scheme. In an alternative embodiment, all network termination devices 8-i may have the same priority.

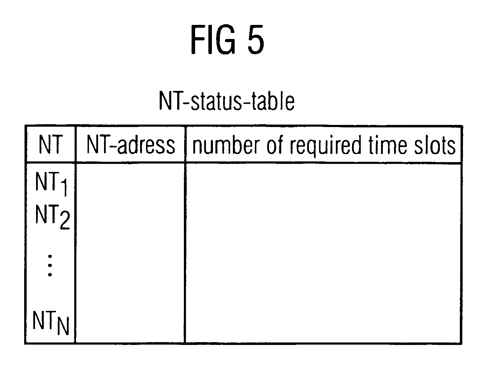

Fig. 5 shows an example for a network termination device status table stored within the storing means 48. Each network termination device connected to the line termination device 2 has a unique network termination device address. As status information, the status table may contain the number of time slots required by the different network termination devices 8-i for data transmission. This number is received by the line termination device 2 in an upstream data frame as a request message. Any kind of further data information of the different network termination devices 8-I may be stored in the status table which are necessary for the selection algorithm.

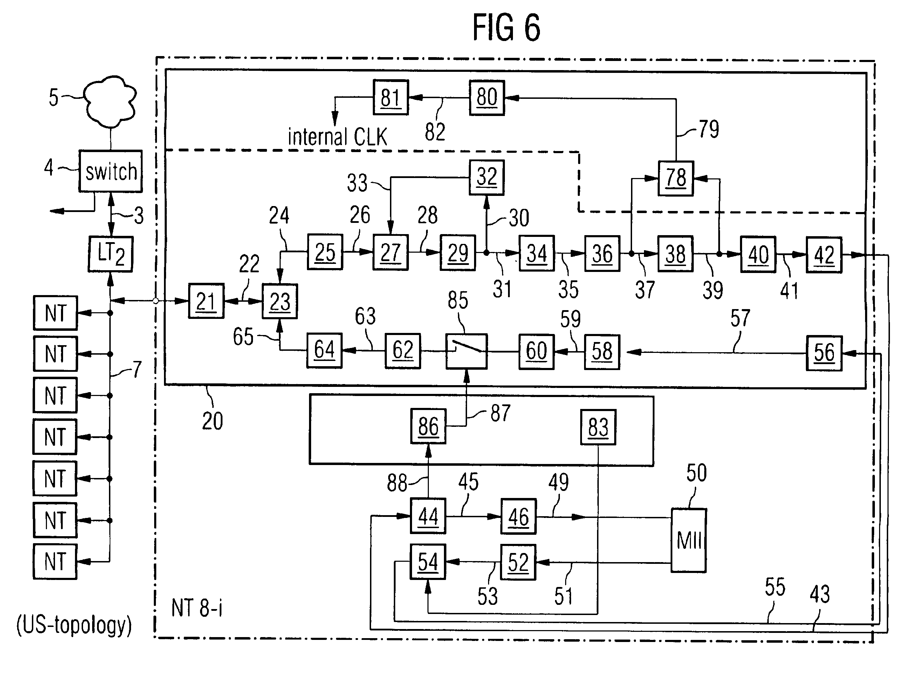

Fig. 6 shows a block diagram of a preferred embodiment of a network termination device 8 according to the present invention.

The network termination device 8 comprises an xDSL transceiver 20 having the a similar structure as the xDSL transceiver 20 in the line termination device. Additionally, the network termination device 8 comprises a timing circuit 78 for tracking the timing of the clock signal of the line termination device 2. The timing circuit 78 is provided for synchronizing on the line termination device master clock. The timing circuit 78 is connected via line 79 through a voltage controller circuit 80 controlling a voltage controlled oscillator 81 via control line 82, said voltage controlled oscillator 81 generating an internal clock signal for the network termination device.

The network termination device 8 further comprises a network termination device status generator 83 generating any kind of status information data describing the status of the network termination device. The NT status generator 83 generates messages which contain information about the network termination device, and in particular how many time slots for data transmission are required by the network termination device. The generated request message is transmitted via a line 84 to the TC framer 54 and put into a message field within an upstream data frame to be sent to the line termination device by the xDSL transceiver 20.

In the transmitting path of the xDSL transceiver 20 of the network termination device 8 there is provided an additional switch 85 controlled by a grant decoder 86 via a control line 87. When sending data information switch 85 is closed. The request message generator 83 generates data transmission request message when the data communication device 9 connected to the network termination device 8 wants to send data to the line termination device 2. In a preferred embodiment, the network termination device 8 contains a buffer memory for buffering data sent from the data communication device 9 when a request for data communication is not granted by the line termination device 2 immediately.

The grant message decoder 86 is connected via line 88 to the TC deframer 44 and decodes the messages within a message field of the received downstream data frames broadcasted by the line termination device 2 via the data communication medium 7. In case that the grant decoder 86 decodes a grant message addressed to the specific network termination device 8-i it sends a control signal via the control line 87+0 to the switch 85 and the buffered data coming from the corresponding data communication device 9-i connected to the network termination device 8-i are transmitted to the line termination device 2 via the data communication medium 7 which is preferably an unshielded twisted pair telephone line.

The TC framer 54 within the line termination device and the network termination device may also contain a Reed-Solomon-correction unit, a scrambler and an interleaver.

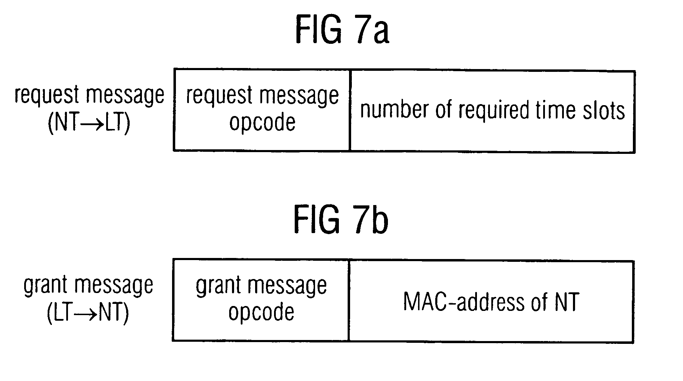

Fig. 7a shows a request message transmitted from a network termination device 8 upstream to a line termination device 2 in principle. The request message which is put into a message field of an upstream data frame contains a request message opcode which may be recognized by the TC deframer unit 44 within the line termination device 2. The request message further includes a number of time slots which are required for data transmission by the network termination device 8 which sends the request message.

Fig. 7b shows a grant message in principle. The grant message contains a grant message opcode which may be recognized by a grant message decoder 86 within a network termination device 8. The grant message further contains the MAC address of the destination network termination device 8.

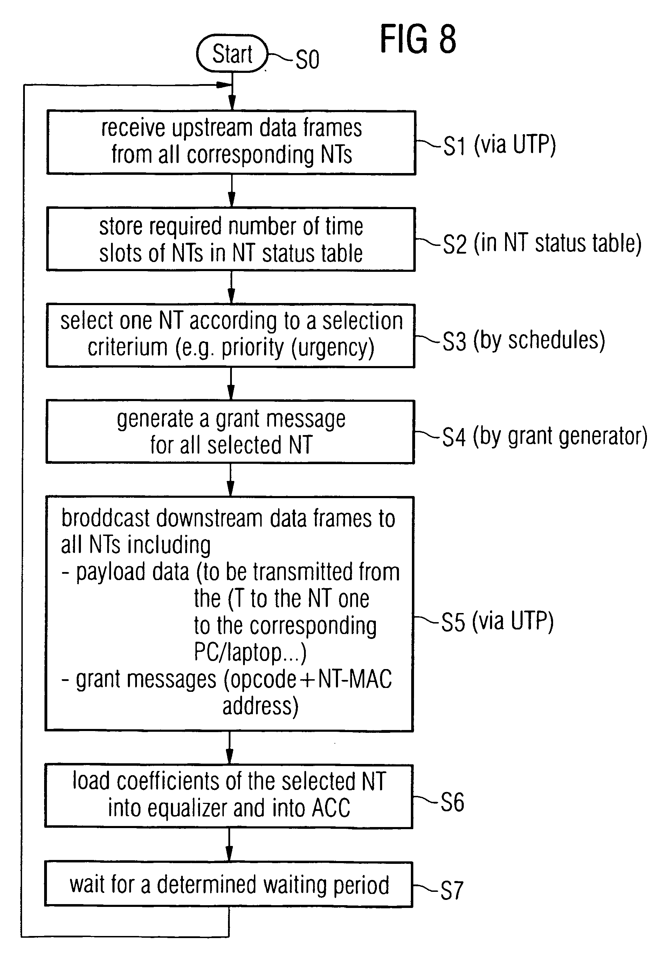

Fig. 8 shows a flowchart for describing the operation within a line termination device 2 in principle.

After a start step S0, the line termination device 2 receives in a step S1 upstream data frames from all corresponding network termination devices 8-i connected to the line termination device 2 via the data transmission medium 7. The network termination devices 8-i are scheduled by the line termination device 2.

If the received upstream data frames contain data transmission request messages, the TC deframer 44 of the line termination device 2 stores the number of time slots requested by the network termination device into the NT status table of memory 48 in a step S2.

In step S3, the selection unit 66 selects at least one network termination device 8-i according to programmed selection criteria according to a given priority or to urgency of data transmission.

In a further step S4, the grant message generator 68 is activated by the selection unit 66 and generates a grant message addressed to the selected network termination device 8-i.

In a step S5, the line termination device 2 broadcasts downstream data frames to all network termination devices 8-i connected to the line termination device 2 via the telephone line 7. The broadcasted downstream data frames include payload data to be transmitted from the line termination device 2 to the network termination devices 8 and from there to the corresponding data communication devices 9 such as computers, laptops or IP phones. Further data frames include the generated grant messages, i.e. the grant message opcode and the MAC-addresses of the selected network termination devices 8.

In a further step S6, the AGC coefficients stored in the memory 73 and the equalizer coefficients stored in the memory 74 are loaded into the automatic gain control circuit 32 and into the equalizer 38 of the xDSL transceiver 20 within the line termination device 2.

In a further step S7, the line termination device 2 waits for determined response time for the response from the network termination devices 8.

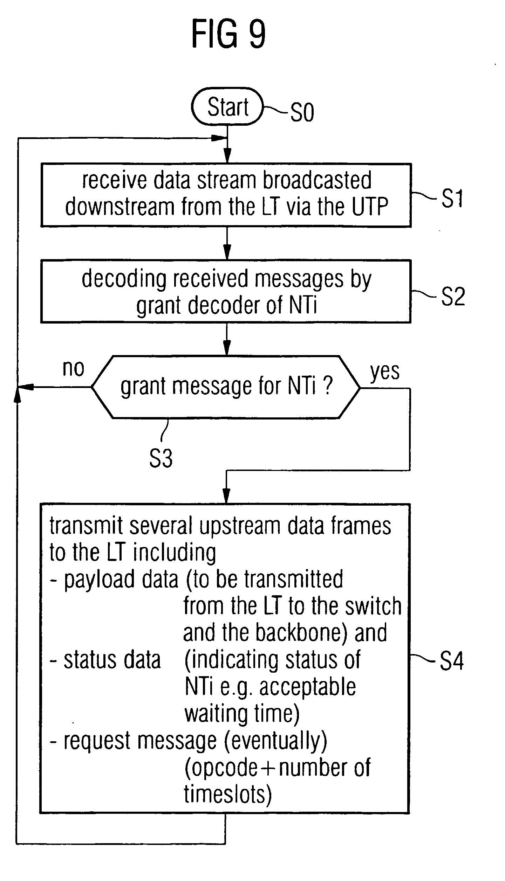

Fig. 9 shows the further flowchart for describing the operation within the network termination device 8-1 according to the present invention. After a start step S0, the network termination device 8 receives a data stream broadcasted from the line termination device 2 via the data transmission medium 7 in a step S1. The messages within the message fields of the received downstream data frames are decoded by the decoder 86 within the network termination device 8 in a step S2.

In a further step S3, it is decided whether the received message is a grant message for the specific network termination device 8 or not. In case that the network termination device did not receive a grant message, it further monitors the data frames broadcasted by the corresponding line termination device 2.

In case that the network termination device 8 has received a grant message from the line termination device 2, it transmits in a step S4 several upstream data frames to the line termination device 2 via the data transmission medium 7. The number of the transmitted upstream data frames depends on the number of time slots allocated by the line termination device 2 for data transmission. The upstream data streams include payload data to be transmitted from the line termination device 2 via switch 4 to further line termination devices 2 or to the backbone 5 or to other network termination devices 8 within the same group. Further, the upstream data frames include status data indicating the actual status of the network termination device 8-i, e.g. acceptable waiting time for receiving grant messages.
Further, the upstream data frame sent by the network termination device 8 may contain further messages, such as a further request message containing a request message opcode and number of time slots required for further data transmission.

The line termination device 2 comprises of an xDSL transceiver having a MAC functionality and acts as the master of the point to multi-point data link. The line termination device 2 schedules each network termination device 8 on a TDD basis. In a European or Asian network topology, a passive signal splitter is provided in order to combine the xDSL signal of different users to one copper line.

The network termination device 8 comprises of an xDSL transceiver transmitting data according to the request received from the master, i.e. a line termination device 2.

On the downstream frequency band, a sustained signal is transmitted permanently from the line termination device 2, i.e. the line termination device 2 broadcasts all the time downstream data frames. This has the advantage that all network termination devices 8 keep being synchronized to the downstream signal. Each network termination device 8 transmits its upstream signal when getting a grant on the message channel. The transmission is performed for a granted period of time.

With the invention it is possible using a well-proven xDSL-QAM transceiver for the physical layer over the target infrastructure which is e.g. a telephone line (CAT3). Using a TDM media access control on the upstream side and broadcasting of data frames on the downstream has the advantage that the xDSL transceiver has a reduced synchronization time on the upstream. Using an xDSL transceiver makes the system according to the present invention compliant with other xDSL systems.

The data transmission is carried on a signal copper line, upstream and downstream, wherein the copper line may be shared by at least eight users. Since the line termination device 2 works as a master, no collision base MAC is required and all network communication devices are fully synchronized. The data transmission network may be implemented either in a US-topology or European/Asian topology. The data transmission network according to the present invention takes advantage of the current asymmetric application demand and is compatible with 10BaseS. Possible applications are fast Internet, game on demand, netgames, centric services, MPEG-4 VOD.

In a preferred embodiment, the messages are protected with CRC. In case that an error is detected in one message, the message may be discarded. Some important messages may be transmitted up to three times in order to ensure their reception. The grant message has to have a minimal response time.

The line termination device 2 keeps the last equalizer coefficients and ACG coefficients of each network termination device 8 connected to the line termination device 2. The line termination device 2 reloads the coefficients to its xDSL transceiver while awaiting the relevant NT signal. In order to avoid reflections on the data transmission medium, the impedances of the different network termination devices 8 are balanced.

## Claims

1. Data transmission network having:
at least one line termination device (2) connected via a telephone line (7) to several network termination devices (8),
each network termination device (8) comprising:
(a1) a request message generator (83) for generating a data transmission request message when a data communication device (9) connected to the network termination device (8) is sending data ,
(a2) wherein a data transmission request message comprises a request message opcode and a number of time slots required for data transmission of the data sent by said data transmission device (9), and
(a3) an xDSL transceiver (20) for transmitting an upstream data frame including the generated request message via the telephone line (7) to the line termination device (2),
said line termination device (2) comprising
(b1) a selection unit (66) for selecting network termination devices (8), which have sent a data transmission request message depending on status information data of the network termination devices (8) stored in storing means (4) of said line termination device (2),
wherein the status information data includes addresses of the network termination devices (8) and corresponding numbers of time slots required for data transmission, wherein the numbers are received by said line termination device (2) from the network termination devices (8) in data transmission request messages,
(b2) a grant message generator (68) for generating data transmission grant messages for the selected network termination device (8),
(b3) wherein each data transmission grant message comprises a grant message opcode and an address of the selected network termination device (8), **characterized by**
(b4) an xDSL transceiver (20) for broadcasting downstream data frames including the generated grant messages via the telephone line (7) to the network termination devices (8).

2. Data transmission network according to claim 1,
wherein
the upstream data frames are sent from the network termination device (8) to the line termination device (2) via the telephone line (7) in an upstream frequency band, and
the downstream data frames are sent from the line termination device (2) to the network termination device (8) via the telephone line (7) in a downstream frequency band.

3. Data transmission network according to claim 2,
wherein
the downstream frequency band ranges between 1 and 3 MHz and the upstream frequency band ranges between 4 and 8 MHz.

4. Data transmission network according to claim 1,
wherein each line termination device (2) comprises an MII interface (50) for the connection to a switch (4).

5. Data transmission network according to claim 1,
wherein each data frame comprises:
a synchronization data field,
a message data field,
a payload data field, and
an error correction data field.

6. Data transmission network according to claim 1,
wherein each network termination device (8) is connected to a passive signal splitter.

7. Data transmission network according to claim 6,
wherein the passive signal splitter comprises
a low-pass filter (19-i) for filtering a telephone signal, and
a high-pass filter (12-i) for filtering an xDSL data signal.

8. Data transmission network according to claim 1,
wherein the selection unit (66) reads the status information data stored in the storing means (48), selects the network termination devices for data transmission according to a programmed selection algorithm and activates the grant message generator (68) for generating grant messages for the selected network termination devices (8).

9. Data transmission network according to claim 1,
wherein the xDSL transceiver (20) of the line termination device (2) includes an adaptive automatic gain control circuit (32) and an equalizer (38).

10. Data transmission network according to claim 9,
wherein the line termination device (2) comprises
a first storing means (73) for storing the AGC coefficients for the network termination devices (8) connected to the line termination device (2), and
a second storing means (74) for storing equalizer coefficients for the network termination devices (8) connected to the line termination device (2).

11. Data transmission network according to claim 10,
wherein the equalizer coefficients of the selected network termination device (8) selected by the selecting unit (66) are loaded into the AGC circuit (32) of the xDSL transceiver (20) of the line termination device (2).

12. Data transmission network according to claim 10,
wherein the equalizer coefficient of the selected network termination device (8) selected by the selecting unit (66) are loaded into the equalizer (38) of the xDS1 transceiver (20) of the line termination device (2).

13. Data transmission network according to claim 1,
wherein the network termination device (8) comprises a grant decoder (86) for decoding messages within downstream data frames broadcasted by the line termination device (2).

14. Data transmission network according to claim 1,
wherein the xDSL transceiver (20) are VDSL transceivers.

15. Data transmission network according to claim 1,
wherein the impedance of the network termination devices (8) connected to the telephone line (7) are balanced.

16. Data transmission network according to claim 1,
wherein eight network termination devices (8) are connected via the telephone line (7) to the line termination device (2).

17. Data transmission network according to claim 1,
wherein several line termination devices (2) are connected to a switch (4).

18. Data transmission network according to claim 17,
wherein the switch (4) is connected to an IP backbone (5).

19. Method for data transmission comprises the following steps:
(a) generating a data transmission request message by a network termination device (8) when the network termination device receives data from a connected data communication device (9),
wherein a data transmission request message comprises a request message opcode and a number of time slots required for data transmission of the data sent by said data communication device (9) ;
(b) transmitting the generated data transmission request message within an upstream data stream via a telephone line (7) to a line termination device (2);
(c) selecting the network termination devices (8) depending on stored status information data of the network termination devices (8),
wherein the status information data includes addresses of the network termination devices (8) and corresponding numbers of the required time slots required for data transmission, wherein the numbers are received from the network termination device (8) in data transmission request messages;
(d) generating data transmission grant messages for the selected network termination devices (8) by the line termination device (2),
wherein each data transmission grant message comprises a grant message opcode and an address of the selected network termination device (8); **characterized by**
(e) broadcasting downstream data frames containing the generated grant messages via the telephone line (7) to the connected network communication devices (8); and
(f) transmitting data from the selected network termination device (8) after the grant message has been decoded.

20. Line termination device comprising
a selection unit (66) for selecting a network termination device (8) from a group of network termination devices connected to the line termination device (2) in response to a request message depending on status information data of the network termination devices (8) stored in storing means (48),
wherein the status information data includes addresses of the network termination device (8) and corresponding numbers of time slots required for data transmission, wherein the numbers are received from the network termination devices (8) in data transmission request messages;
a grant message generator (68) for generating data transmission grant messages for the selected network termination devices (8),
wherein each data transmission grant message comprises a grant message opcode and an address of the selected network termination device (8),
**characterized by**
an xDSL transceiver (20) for broadcasting downstream data frames including the generated grant messages via a telephone line (7) to the network termination devices (8).

## Patentansprüche

1. Datenübertragungsnetzwerk, das Folgendes aufweist:
mindestens eine Leitungsabschlusseinrichtung (2), die über eine Telefonleitung (7) mit mehreren Netzwerkabschlusseinrichtungen (8) verbunden ist,
wobei jede Netzwerkabschlusseinrichtung (8) Folgendes umfasst:
(a1) einen Anforderungsnachrichtengenerator (83) zum Erzeugen einer Datenübertragungs-Anforderungsnachricht, wenn eine mit der Netzwerkabschlusseinrichtung (8) verbundene Datenkommunikationseinrichtung (9) Daten sendet,
(a2) wobei die Datenübertragungs-Anforderungsnachricht einen Anforderungsnachrichten-Opcode und eine Anzahl von für die Datenübertragung der durch die Datenübertragungseinrichtung (9) gesendeten Daten erforderlichen Zeitschlitzen umfasst und
(a3) einen xDSL-Sender/-Empfänger (20) zum Senden eines Upstream-Datenrahmens, der die erzeugte Anforderungsnachricht enthält, über die Telefonleitung (7) zu der Leitungsabschlusseinrichtung (2),
wobei die Leitungsabschlusseinrichtung (2) Folgendes umfasst:
(b1) eine Auswahleinheit (66) zum Auswählen von Netzwerkabschlusseinrichtungen (8), die eine Datenübertragungs-Anforderungsnachricht gesendet haben, abhängig von Statusinformationsdaten der Netzwerkabschlusseinrichtungen (8) die in einem Speichermittel (4) der Leitungsabschlusseinrichtung (2) gespeichert werden,
wobei die Statusinformationsdaten Adressen von Netzwerkabschlusseinrichtungen (8) und entsprechende Anzahlen von für Datenübertragung erforderlichen Zeitschlitzen umfassen, wobei die Anzahlen durch die Leitungsabschlusseinrichtung (2) von den Netzwerkabschlusseinrichtungen (8) in Datenübertragungs-Anforderungsnachrichten empfangen werden,
(b2) einen Gewährungsnachrichtengenerator (68) zum Erzeugen von Datenübertragungs-Gewährungsnachrichten für die ausgewählte Netzwerkabschlusseinrichtung (8),
(b3) wobei jede Datenübertragungs-Gewährungsnachricht einen Gewährungsnachrichten-Opcode und eine Adresse der ausgewählten Netzwerkabschlusseinrichtung (8) umfasst, **gekennzeichnet durch**
(b4) einen xDSL-Sender/-Empfänger (20) zum Rundsenden von Downstream-Datenrahmen, die die erzeugten Gewährungsnachrichten enthalten, über die Telefonleitung (7) zu den Netzwerkabschlusseinrichtungen (8).

2. Datenübertragungsnetzwerk nach Anspruch 1, wobei
die Upstream-Datenrahmen von der Netzwerkabschlusseinrichtung (8) über die Telefonleitung (7) in einem Upstream-Frequenzband zu der Leitungsabschlusseinrichtung (2) gesendet werden und
die Downstream-Datenrahmen von der Leitungsabschlusseinrichtung (2) über die Telefonleitung (7) in einem Downstream-Frequenzband zu der Netzwerkabschlusseinrichtung (8) gesendet werden.

3. Datenübertragungsnetzwerk nach Anspruch 2, wobei
das Downstream-Frequenzband im Bereich zwischen 1 und 3 MHz liegt und das Upstream-Frequenzband im Bereich zwischen 4 und 8 MHz liegt.

4. Datenübertragungsnetzwerk nach Anspruch 1, wobei jede Leitungsabschlusseinrichtung (2) eine MII-Schnittstelle (50) zur Verbindung mit einem Switch (4) umfasst.

5. Datenübertragungsnetzwerk nach Anspruch 1, wobei jeder Datenrahmen Folgendes umfasst:
ein Synchronisationsdatenfeld,
ein Nachrichtendatenfeld,
ein Nutzinformations-Datenfeld und
ein Fehlerkorrektur-Datenfeld.

6. Datenübertragungsnetzwerk nach Anspruch 1, wobei jede Netzwerkabschlusseinrichtung (8) mit einem passiven Signalteiler verbunden ist.

7. Datenübertragungsnetzwerk nach Anspruch 6, wobei der passive Signalteiler Folgendes umfasst:
ein Tiefpassfilter (19-i) zum Filtern eines Telefonsignals und
ein Hochpassfilter (12-i) zum Filtern eines xDSL-Datensignals.

8. Datenübertragungsnetzwerk nach Anspruch 1, wobei die Auswahleinheit (66) die in dem Speichermittel (48) gespeicherten Statusinformationsdaten liest, die Netzwerkabschlusseinrichtungen für Datenübertragung gemäß einem programmierten Auswahlalgorithmus auswählt und den Gewährungsnachrichtengenerator (68) zum Erzeugen von Gewährungsnachrichten für die ausgewählten Netzwerkabschlusseinrichtungen (8) aktiviert.

9. Datenübertragungsnetzwerk nach Anspruch 1, wobei der xDSL-Sender/-Empfänger (20) der Leitungsabschlusseinrichtung (2) eine adaptive automatische Verstärkungsregelschaltung (32) und einen Entzerrer (38) umfasst.

10. Datenübertragungsnetzwerk nach Anspruch 9, wobei die Leitungsabschlusseinrichtung (2) Folgendes umfasst:
ein erstes Speichermittel (73) zum Speichern der AGC-Koeffizienten für die mit der Leitungsabschlusseinrichtung (2) verbundenen Netzwerkabschlusseinrichtungen (8) und
ein zweites Speichermittel (74) zum Speichern von Entzerrerkoeffizienten für die mit der Leitungsabschlusseinrichtung (2) verbundenen Netzwerkabschlusseinrichtungen (8).

11. Datenübertragungsnetzwerk nach Anspruch 10, wobei die Entzerrerkoeffizienten der durch die Auswahleinheit (66) ausgewählten Netzwerkabschlusseinrichtung (8) in die AGC-Schaltung (32) des xDSL-Senders/-Empfängers (20) der Leitungsabschlusseinrichtung (2) geladen werden.

12. Datenübertragungsnetzwerk nach Anspruch 10, wobei die Entzerrerkoeffizienten der durch die Auswahleinheit (66) ausgewählten Netzwerkabschlusseinrichtung (8) in den Entzerrer (38) des xDSL-Senders/-Empfängers (20) der Leitungsabschlusseinrichtung (2) geladen werden.

13. Datenübertragungsnetzwerk nach Anspruch 1, wobei die Netzwerkabschlusseinrichtung (8) einen Gewährungsdekodierer (86) zum Dekodieren von Nachrichten in durch die Leitungsabschlusseinrichtung (2) rund gesendeten Downstream-Datenrahmen umfasst.

14. Datenübertragungsnetzwerk nach Anspruch 1, wobei es sich bei dem xDSL-Sender/-Empfänger (20) um VDSL-Sender/-Empfänger handelt.

15. Datenübertragungsnetzwerk nach Anspruch 1, wobei die Impedanz der mit der Telefonleitung (7) verbundenen Netzwerkabschlusseinrichtungen (8) ausgeglichen ist.

16. Datenübertragungsnetzwerk nach Anspruch 1, wobei acht Netzwerkabschlusseinrichtungen (8) über die Telefonleitung (7) mit der Leitungsabschlusseinrichtung (2) verbunden sind.

17. Datenübertragungsnetzwerk nach Anspruch 1, wobei mehrere Leitungsabschlusseinrichtungen (2) mit einem Switch (4) verbunden sind.

18. Datenübertragungsnetzwerk nach Anspruch 17, wobei der Switch (4) mit einem IP-Backbone (5) verbunden ist.

19. Verfahren zur Datenübertragung, mit den folgenden Schritten:
(a) Erzeugen einer Datenübertragungs-Anforderungsnachricht durch eine Netzwerkabschlusseinrichtung (8), wenn die Netzwerkabschlusseinrichtung Daten von einer angeschlossenen Datenkommunikationseinrichtung (9) empfängt,
wobei eine Datenübertragungs-Anforderungsnachricht einen Anforderungsnachrichten-Opcode und eine Anzahl von für die Datenübertragung der durch die Datenkommunikationseinrichtung (9) gesendeten Daten erforderlichen Zeitschlitzen umfasst;
(b) Senden der erzeugten Datenübertragungs-Anforderungsnachricht in einem Upstream-Datenstrom über eine Telefonleitung (7) zu einer Leitungsabschlusseinrichtung (2);
(c) Auswählen der Netzwerkabschlusseinrichtungen (8) abhängig von gespeicherten Statusinformationsdaten der Netzwerkabschlusseinrichtungen (8), wobei die Statusinformationsdaten Adressen der Netzwerkabschlusseinrichtungen (8) und entsprechende Anzahlen der für die Datenübertragung erforderlichen Zeitschlitze umfassen, wobei die Anzahlen in Datenübertragungs-Anforderungsnachrichten von der Netzwerkabschlusseinrichtung (8) empfangen werden;
(d) Erzeugen von Datenübertragungs-Gewährungsnachrichten für die ausgewählten Netzwerkabschlusseinrichtungen (8) durch die Leitungsabschlusseinrichtung (2),
wobei jede Datenübertragungs-Gewährungsnachricht einen Gewährungsnachrichten-Opcode und eine Adresse der ausgewählten Netzwerkabschlusseinrichtung (8) umfasst;
**gekennzeichnet durch**
(e) Rundsenden von Downstream-Datenrahmen, die die erzeugten Gewährungsnachrichten enthalten, über die Telefonleitung (7) zu den angeschlossenen Netzwerkkommunikationseinrichtungen (8); und
(f) Senden von Daten von der gewählten Netzwerkabschlusseinrichtung (8), nachdem die Gewährungsnachricht dekodiert wurde.

20. Leitungsabschlusseinrichtung, umfassend:
eine Auswahleinheit (66) zum Auswählen einer Netzwerkabschlusseinrichtung (8) aus einer Gruppe von mit der Leitungsabschlusseinrichtung (2) verbundenen Netzwerkabschlusseinrichtungen als Reaktion auf eine Anforderungsnachricht abhängig von Statusinformationsdaten der Netzwerkabschlusseinrichtungen (8), die in einem Speichermittel (48) gespeichert werden,
wobei die Statusinformationsdaten Adressen der Netzwerkabschlusseinrichtung (8) und entsprechende Anzahlen der für die Datenübertragung erforderlichen Zeitschlitze umfassen, wobei die Anzahlen in Datenübertragungs-Anforderungsnachrichten von den Netzwerkabschlusseinrichtungen (8) empfangen werden;
einen Gewährungsnachrichtengenerator (68) zum Erzeugen von Datenübertragungs-Gewährungsnachrichten für die ausgewählten Netzwerkabschlusseinrichtungen (8),
wobei jede Datenübertragungs-Gewährungsnachricht einen Gewährungsnachrichten-Opcode und eine Adresse der ausgewählten Netzwerkabschlusseinrichtung (8) umfasst;
**gekennzeichnet durch**
einen xDSL-Sender/-Empfänger (20) zum Rundsenden von Downstream-Datenrahmen, die die erzeugten Gewährungsnachrichten enthalten, über eine Telefonleitung (7) zu den Netzwerkabschlusseinrichtungen (8).

## Revendications

1. Réseau de transmission de données ayant :
au moins un dispositif de terminaison de ligne (2) connecté par l'intermédiaire d'une ligne téléphonique (7) à plusieurs dispositifs de terminaison de réseau (8),
chaque dispositif de terminaison de réseau (8) comprenant :
(a1) un générateur de message de demande (83) pour produire un message de demande de transmission de données quand un dispositif de communication de données (9) connecté au dispositif de terminaison de réseau (8) envoie des données,
(a2) dans lequel un message de demande de transmission de données comprend un code d'opération de message de demande et un certain nombre de tranches de temps nécessaires pour la transmission de données des données envoyées par ledit dispositif de communication de données (9), et
(a3) un émetteur-récepteur xDSL (20) pour transmettre une trame de données amont, incluant le message de demande produit, par l'intermédiaire de la ligne téléphonique (7), au dispositif de terminaison de ligne (2),
ledit dispositif de terminaison de ligne (2) comprenant
(b1) une unité de sélection (66) pour sélectionner des dispositifs de terminaison de réseau (8), qui ont envoyé un message de demande de transmission de données en fonction de données d'information d'état des dispositifs de terminaison de réseau (8) stockées dans un moyen de stockage (4) dudit dispositif de terminaison de ligne (2),
dans lequel les données d'information d'état incluent des adresses des dispositifs de terminaison de réseau (8) et des nombres correspondants de tranches de temps nécessaires pour la transmission de données, dans lesquels les nombres sont reçus par ledit dispositif de terminaison de ligne (2) en provenance des dispositifs de terminaison de réseau (8) dans des messages de demande de transmission de données,
(b2) un générateur de message d'octroi (68) pour produire des messages d'octroi de transmission de données pour le dispositif de terminaison de réseau sélectionné (8),
(b3) dans lequel chaque message d'octroi de transmission de données comprend un code d'opération de message d'octroi et une adresse du dispositif de terminaison de réseau sélectionné (8),
**caractérisé par**
(b4) un émetteur-récepteur xDSL (20) pour diffuser des trames de données aval incluant les messages d'octroi produits, par l'intermédiaire de la ligne téléphonique (7), aux dispositifs de terminaison de réseau (8).

2. Réseau de transmission de données selon la revendication 1, dans lequel
les trames de données amont sont envoyées en provenance du dispositif de terminaison de réseau (8) au dispositif de terminaison de ligne (2) par l'intermédiaire de la ligne téléphonique (7) dans une bande de fréquences amont, et
les trames de données aval sont envoyées en provenance du dispositif de terminaison de ligne (2) au dispositif de terminaison de réseau (8) par l'intermédiaire de la ligne téléphonique (7) dans une bande de fréquences aval.

3. Réseau de transmission de données selon la revendication 2, dans lequel
la bande de fréquences aval s'étend entre 1 et 3 MHz et la bande de fréquences amont s'étend entre 4 et 8 MHz.

4. Réseau de transmission de données selon la revendication 1, dans lequel chaque dispositif de terminaison de ligne (2) comprend une interface MII (50) pour la connexion à un commutateur (4).

5. Réseau de transmission de données selon la revendication 1, dans lequel chaque trame de données comprend :
un champ de données de synchronisation,
un champ de données de message,
un champ de données de charge utile, et
un champ de données de correction d'erreur.

6. Réseau de transmission de données selon la revendication 1, dans lequel chaque dispositif de terminaison de réseau (8) est connecté à un séparateur de signal passif.

7. Réseau de transmission de données selon la revendication 6, dans lequel le séparateur de signal passif comprend un filtre passe-bas (19-i) pour le filtrage d'un signal téléphonique, et
un filtre passe-haut (12-i) pour le filtrage d'un signal de données xDSL.

8. Réseau de transmission de données selon la revendication 1, dans lequel l'unité de sélection (66) lit les données d'information d'état stockées dans le moyen de stockage (48), sélectionne les dispositifs de terminaison de réseau pour la transmission de données selon un algorithme de sélection programmé et active le générateur de message d'octroi (68) pour produire des messages d'octroi pour les dispositifs de terminaison de réseau sélectionnés (8).

9. Réseau de transmission de données selon la revendication 1, dans lequel l'émetteur-récepteur xDSL (20) du dispositif de terminaison de ligne (2) inclut un circuit adaptatif de commande automatique de gain (32) et un égaliseur (38).

10. Réseau de transmission de données selon la revendication 9, dans lequel le dispositif de terminaison de ligne (2) comprend un premier moyen de stockage (73) pour stocker les coefficients de CAG pour les dispositifs de terminaison de réseau (8) connectés au dispositif de terminaison de ligne (2), et un second moyen de stockage (74) pour stocker des coefficients d'égaliseur pour les dispositifs de terminaison de réseau (8) connectés au dispositif de terminaison de ligne (2).

11. Réseau de transmission de données selon la revendication 10, dans lequel les coefficients d'égaliseur du dispositif de terminaison de réseau sélectionné (8) sélectionné par l'unité de sélection (66) sont chargés dans le circuit de CAG (32) de l'émetteur-récepteur xDSL (20) du dispositif de terminaison de ligne (2).

12. Réseau de transmission de données selon la revendication 10, dans lequel les coefficients d'égaliseur du dispositif de terminaison de réseau sélectionné (8) sélectionné par l'unité de sélection (66) sont chargés dans l'égaliseur (38) de l'émetteur-récepteur xDSL (20) du dispositif de terminaison de ligne (2).

13. Réseau de transmission de données selon la revendication 1, dans lequel le dispositif de terminaison de réseau (8) comprend un décodeur d'octroi (86) pour décoder des messages à l'intérieur de trames de données aval émises par le dispositif de terminaison de ligne (2).

14. Réseau de transmission de données selon la revendication 1, dans lequel l'émetteur-récepteur xDSL (20) est constitué par des émetteurs-récepteurs VDSL.

15. Réseau de transmission de données selon la revendication 1, dans lequel l'impédance des dispositifs de terminaison de réseau (8) connectés à la ligne téléphonique (7) est équilibrée.

16. Réseau de transmission de données selon la revendication 1, dans lequel huit dispositifs de terminaison de réseau (8) sont connectés par l'intermédiaire de la ligne téléphonique (7) au dispositif de terminaison de ligne (2).

17. Réseau de transmission de données selon la revendication 1, dans lequel plusieurs dispositifs de terminaison de ligne (2) sont connectés à un commutateur (4).

18. Réseau de transmission de données selon la revendication 17, dans lequel le commutateur (4) est connecté à un réseau d'infrastructure d'IP (5).

19. Procédé pour la transmission de données qui comprend les étapes suivantes :
(a) la production d'un message de demande de transmission de données par un dispositif de terminaison de réseau (8) lorsque le dispositif de terminaison de réseau reçoit des données en provenance d'un dispositif de communication de données connecté (9),
dans lequel un message de demande de transmission de données comprend un code d'opération de message de demande et un certain nombre de tranches de temps nécessaires pour la transmission de données des données envoyées par ledit dispositif de communication de données (9) ;
(b) la transmission du message produit de demande de transmission de données à l'intérieur d'un flot de données amont, par l'intermédiaire d'une ligne téléphonique (7), à un dispositif de terminaison de ligne (2) ;
(c) la sélection des dispositifs de terminaison de réseau (8) selon des données d'information d'état stockées des dispositifs de terminaison de réseau (8),
dans lequel les données d'information d'état comprennent des adresses des dispositifs de terminaison de réseau (8) et des nombres correspondants des tranches de temps nécessaires pour la transmission de données, dans lesquels les nombres sont reçus en provenance du dispositif de terminaison de réseau (8) dans des messages de demande de transmission de données ;
(d) la production de messages d'octroi de transmission de données pour les dispositifs de terminaison de réseau sélectionnés (8) par le dispositif de terminaison de ligne (2),
dans lequel chaque message d'octroi de transmission de données comprend un code d'opération de message d'octroi et une adresse du dispositif de terminaison de réseau sélectionné (8) ;
**caractérisé par**
(e) la diffusion de trames de données aval, contenant les messages d'octroi produits, par l'intermédiaire de la ligne téléphonique (7), aux dispositifs de communication de réseau connectés (8) ; et
(f) la transmission de données en provenance du dispositif de terminaison de réseau sélectionné (8) après que le message d'octroi a été décodé.

20. Dispositif de terminaison de ligne comprenant :
une unité de sélection (66) pour sélectionner un dispositif de terminaison de réseau (8) à partir d'un groupe de dispositifs de terminaison de réseau connectés au dispositif de terminaison de ligne (2) en réponse à un message de demande selon des données d'information d'état des dispositifs de terminaison de réseau (8) stockées dans un moyen de stockage (48),
dans lequel les données d'information d'état comprennent des adresses du dispositif de terminaison de réseau (8) et des nombres correspondants de tranches de temps nécessaires pour la transmission de données,
dans lesquels les nombres sont reçus en provenance des dispositifs de terminaison de réseau (8) dans des messages de demande de transmission de données ;
un générateur de message d'octroi (68) pour produire des messages d'octroi de transmission de données pour les dispositifs de terminaison de réseau sélectionnés (8),
dans lequel chaque message d'octroi de transmission de données comprend un code d'opération de message d'octroi et une adresse du dispositif de terminaison de réseau sélectionné (8),
**caractérisé par**
un émetteur-récepteur xDSL (20) pour diffuser des trames de données aval, incluant les messages d'octroi produits, par l'intermédiaire d'une ligne téléphonique (7), aux dispositifs de terminaison de réseau (8).
